# EUROPEAN PATENT SPECIFICATION

(11) **EP 3 913 961 B1**
(45) Date of publication and mention of the grant of the patent: **13.12.2023**
(21) Application number: 21173784.6
(22) Date of filing: 13.05.2021
(51) Int. Cl.: H04W 16/18, H04B 17/391, H04W 24/02

(54) **RADIO OPERATION MANAGEMENT SYSTEM AND RADIO OPERATION ASSISTANT METHOD**
FUNKBETRIEBSVERWALTUNGSSYSTEM UND FUNKBETRIEBSASSISTENZVERFAHREN
SYSTÈME DE GESTION DES OPÉRATIONS RADIO ET PROCÉDÉ D'ASSISTANCE AUX OPÉRATIONS RADIO

(30) Priority: 22.05.2020 JP 2020089355
(43) Date of publication of application: 24.11.2021
(73) Proprietor: Hitachi, Ltd., Tokyo 100-8280 (JP)
(72) Inventor: MIZUGAKI, Kenichi, Tokyo, 100-8280 (JP)
(74) Representative: Mewburn Ellis LLP

(56) References cited:
- JP-A- 2015 115 648
- US-A1- 2010 003 991
- US-A1- 2011 153 294
- US-B2- 9 635 562

## Description

### BACKGROUND OF THE INVENTION

### 1. Field of the Invention

The present invention relates to a radio operation management system that supports operation management of a radio communication system.

### 2. Description of the Related Art

New radio applications such as factory work machine control using ultra-low latency wireless communication technology such as 5G have been attracting attention. Conventional radio involves high communication latency and thus has been difficult to use for real-time device control. Meanwhile, 5G featuring ultra-low latency enables wireless implementation of such control. This enables layout change for producing a small amount of variety of products to be implemented with less wiring change, and thus cost can be reduced and productivity can be improved. Once a 5G base station antenna device is installed, it is physically and legally difficult to change its location. Terminals are attached to work machines, and thus are operated at fixed positions, as long as there is no layout change. These terminals transmit and receive control signals for the work machines. If these control signals are interrupted, the production line will stop, causing a major problem. Therefore, when a radio communication system is applied to factory devices, it is important to evaluate radio wave propagation in advance using a three-dimensional model to check if there is any problem in communication paths.

In factories, even when there is not layout change, a radio wave propagation environment constantly changes due to movement of heavy machinery, in-process inventory, and material. Therefore, evaluation of the radio wave propagation environment using the three-dimensional model at the time of introduction of the radio communication system and layout change would not always be correct, because the actual status of the site differs from the three-dimensional model. Creation of the three-dimensional model is based on results of measurements using laser scanners and the like, and thus costs and takes time. Thus, it is difficult to create the model in response to all the environmental changes occurring daily in factories.

Even if the three-dimensional model can be created, the radio wave propagation evaluation using the three-dimensional model created takes hours to days, meaning that it is ineffective for resolving radio failure in factories where the radio failure needs to be addressed promptly.

A technique for such evaluation of the radio wave propagation environment using the three-dimensional model includes the following prior art. JP 2015-115648 A discloses a radio wave propagation environment evaluation system comprising: a movable robot; and an operation calculation device capable of performing radio communications with the robot. The robot includes: a range finder that acquires three-dimensional data on the periphery of the robot; a robot radio communication unit that transmits the three-dimensional data to the operation calculation device and receives an operation instruction from an operator accepted by the operation calculation device; and a traveling unit that moves the robot based on the operation instruction. The operation calculation device includes: an operation input unit that accepts the operation instruction; an operation calculation device radio communication unit that transmits the operation instruction to the robot, and receives the three-dimensional data from the robot; a three-dimensional structural view generation unit that generates a three-dimensional structural view illustrating a stereoscopic structure of the periphery of the robot; and a radio wave propagation analysis unit that performs radio wave propagation simulation at a first position of the robot using the three-dimensional structural view.
US2010/003991 discloses a physics-based statistical model and simulation method of RF propagation in urban environments.
US9635562 discloses a method for predicting the radio field level and/or the duration of propagation of cellular telephone networks using high-resolution terrain databases. US2011/153294 discloses a method of three dimensional ray tracing in the dynamic radio wave propagation environment.

### SUMMARY OF THE INVENTION

In the radio wave propagation environment evaluation system disclosed in JP 2015-115648 A described above, the radio wave propagation environment is evaluated based on the three-dimensional model created in accordance with the movement of the robot. With this scheme, it takes time to complete the evaluation, and the scheme does not take the speeding up of the evaluation method into consideration. The radio wave propagation evaluation based on such a scheme is difficult to apply to an environment, such as factories, where even a short downtime is intolerable.

Thus, when a problem occurs in the radio communication system, an operation manager estimates the cause of the failure in the radio communication system and addresses the problem based on his or her knowledge and experience, instead of relying on the propagation evaluation result. Shortage of such a highly skilled radio engineer is one of factors hindering the introduction of the radio communication system to factories.

The radio wave propagation evaluation using a three-dimensional model requires, for enabling an impact of partial environmental change due to movement of heavy machineries and equipment to be confirmed, a three-dimensional model corresponding to such an environmental change. Unfortunately, it takes time and cost to create such an updated three-dimensional model. Furthermore, the propagation evaluation using a three-dimensional model takes time (several hours to several days for example), and thus cannot be applied to environments where the problem needs to be addressed in a short period of time. Thus, the propagation evaluation result is difficult to use for countermeasures for failure.

A radio operation management system according to the present invention is as set forth in claim 1. The invention further relates to a radio operation supporting method according to claim 8. The dependent claims describe optional embodiments of the invention.

With an aspect of the present invention, the three-dimensional model is corrected so that the radio wave propagation status can be evaluated with a reduced amount of calculation. Tasks, configurations, and advantageous effects other than those described above will be apparent from the following description on embodiments.

### BRIEF DESCRIPTION OF THE DRAWINGS

Fig. 1 is a diagram illustrating a system configuration of a first embodiment;
Fig. 2 is a diagram illustrating a configuration of an evaluation device of the first embodiment;
Fig. 3 is a flowchart illustrating a sequence of operations performed by the evaluation device of the first embodiment;
Fig. 4 is a flowchart illustrating a method of calculating a range affected by an environmental change, according to the first embodiment;
Fig. 5 is a diagram illustrating an example of a screen presented to an operation manager in the first embodiment;
Fig. 6 is a flowchart illustrating a sequence of operations performed by an evaluation device of a second embodiment;
Fig. 7 is a flowchart illustrating a method of selecting an alternative position candidate, according to the second embodiment;
Fig. 8 is a diagram illustrating an example of a screen presented to the operation manager in the second embodiment;
Fig. 9 is a flowchart illustrating a sequence of operations performed by the evaluation device of a third embodiment;
Fig. 10 is a flowchart illustrating a method of selecting an alternative base station, according to the third embodiment;
Fig. 11 is a diagram illustrating an example of a screen presented to the operation manager in the third embodiment;
Fig. 12 is a flowchart illustrating a sequence of operations for communication failure cause estimation according to a fourth embodiment; and
Fig. 13 is a diagram illustrating an example of a screen presented to the operation manager in the fourth embodiment.

### DESCRIPTION OF THE PREFERRED EMBODIMENTS

### First embodiment

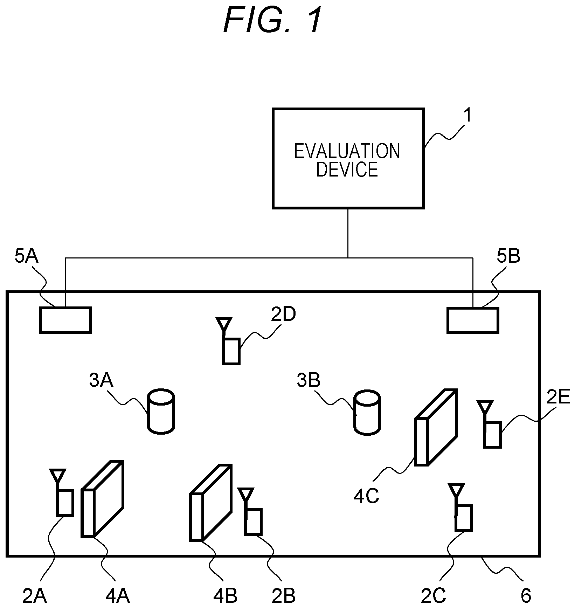

Fig. 1 is a diagram illustrating a system configuration according to the present embodiment.

A first embodiment relates to a radio communication system operation management program used for a radio communication system including a base station 3 fixedly installed and a terminal 2 that communicates with the base station 3. The positional information on the terminal 2 is known. The system according to the present embodiment includes one or more cameras 5 that detect a change in the status of a radio communication area 6 in which the radio communication system is established, and an evaluation device 1 that provides information to an operation manager based on information acquired by the cameras 5.

The evaluation device 1 holds a three-dimensional model of the radio communication area 6 in advance, evaluates radio wave propagation using the three-dimensional model, and records the evaluation result. This three-dimensional model is created by separately modeling an unmovable structure such as a wall, a movable structure 4, a heavy machinery, a material, and the like, and combining the resultant models, so that the three-dimensional model represents the entirety of the radio communication area 6. The creation of the three-dimensional model may be triggered by detection of a change in the radio communication area captured by the camera 5, or an instruction from the operation manager. The positional information on all the terminals 2 and the base station 3 is recorded in the evaluation device 1. When the terminal 2 moves, the position of the terminal 2 is reported to the evaluation device 1 as appropriate. For example, the evaluation device 1 can calculate the current position of the terminal 2, with the terminal 2 including an acceleration sensor, calculating the own movement amount from the result of measurement by the acceleration sensor, and notifying the evaluation device 1 of the amount.

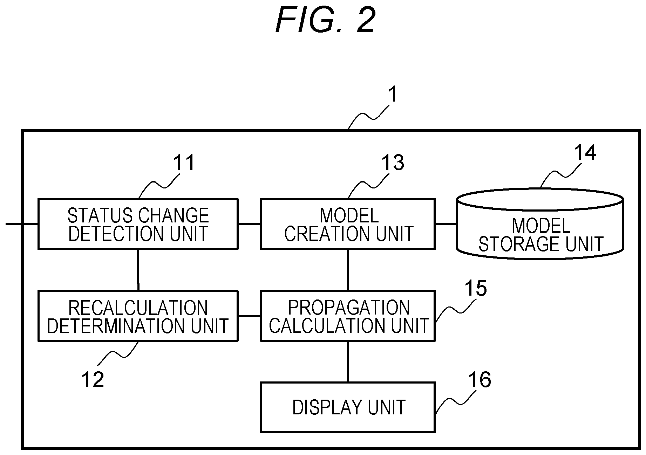

Fig. 2 is a diagram illustrating a configuration of the evaluation device according to the present embodiment.

The evaluation device 1 includes: a status change detection unit 11 that identifies whether there has been a change in the radio communication area and a position of the change, based on information from the camera 5; a model creation unit 13 that corrects the three-dimensional model in accordance with the change in the radio communication area; a model storage unit 14 in which the model created is recorded; a recalculation determination unit 12 that determines a recalculation range of the radio wave propagation evaluation based on a position of the change and the positional information on the terminal and the base station; a propagation calculation unit 15 that recalculates the radio wave propagation evaluation based on the recalculation range determined; and a display unit 16 that displays the propagation evaluation result to the operation manager. A method of the radio wave propagation evaluation includes a ray tracing method including: tracing the movement of the radio waves from a transmission source; and calculating the amount and route of the radio waves to each location to estimate the radio wave status of the location.

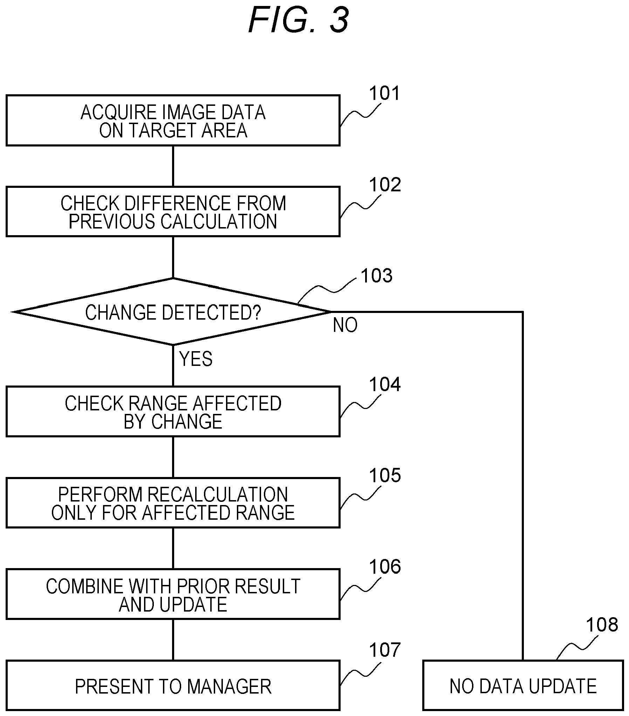

Fig. 3 is a flowchart illustrating a sequence of operations performed by an evaluation device according to the present embodiment.

The camera 5 captures an image of the radio communication area at a predetermined timing (for example, at a predetermined time interval). The evaluation device 1 acquires the image of the radio communication area captured by the camera 5 (101). The timing of at which the image is acquired from the camera 5 may include a timing at which a sensor attached to the camera 5 detects a movement in the target area, and a timing when the measurement is to be performed in response to an instruction from the evaluation device 1. The evaluation device 1 may acquire an image input by the operation manager instead of acquiring an image from the camera 5.

The evaluation device 1 compares the acquired image with the past image to determine whether the environment has changed due to the movement of in-process inventory, material, heavy machinery, and the like in the radio communication area (102).

When it is determined that the environment has not changed, the data is not updated (108), and the system stands by until the next image is acquired or an instruction from the operation manager is received.

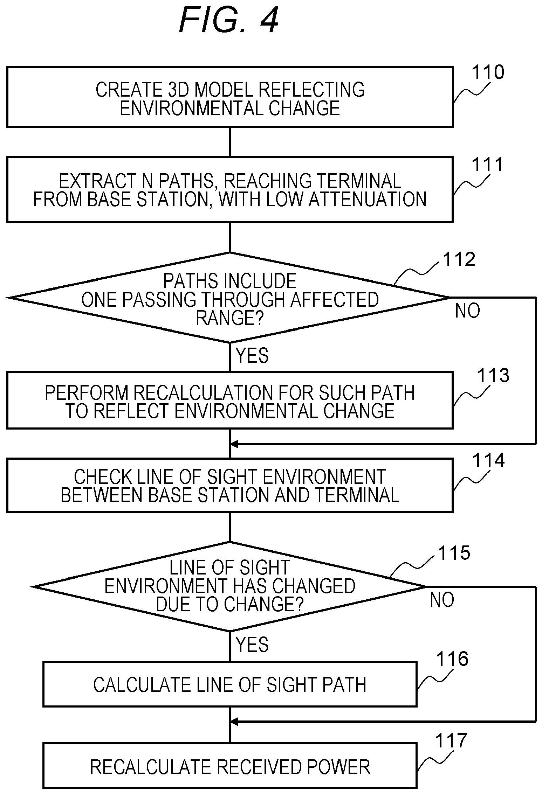

On the other hand, when it is determined that the environment has changed, a range affected by the change, that is, a radio terminal 2 affected is checked (104). A method of checking the affected range will be described later with reference to Fig. 4.

After the terminal affected has been confirmed, the radio wave propagation status is recalculated based on the influence (105). Specifically, the propagation evaluation on an affected path is recalculated, and an intensity of a signal transmitted through the affected path recalculated and an intensity of a signal transmitted through an unaffected path are combined, to update a signal reception status and transmitted signal arrival status of each terminal (106).

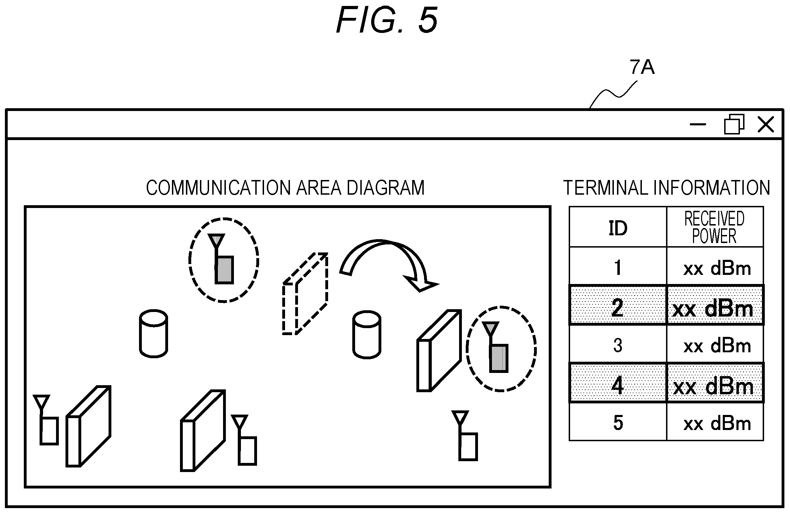

Then, the update result is presented to the operation manager (107), and the system returns to the standby state. The method of presentation includes displaying on a screen as described later with reference to Fig. 5, as well as transmitting a message and turning ON a warning light on a terminal the message transmission and/or reception status of which is compromised.

Fig. 4 is a flowchart illustrating a method of calculating a range affected by an environmental change according to the present embodiment, and illustrates details of step 104 in Fig. 3.

First of all, a three-dimensional model reflecting a change in the environment is created (110). In the three-dimensional model according to the present embodiment, an unmovable structure and a movable structure are modeled to be distinguishable from each other. Thus, for a model of a movable object, a model changed to the position detected in the image captured by the camera 5 is created and is combined with the unmovable model. Thus, a new three-dimensional model is created.

The evaluation device 1 has a signal arrival status that has been calculated recorded, and has recognized an arrival path of radio waves during communications between the terminal 2 and the base station 3 through calculation using the ray tracing method or the like. Among such paths, N path with the smallest attenuation amounts, that is, the largest intensities of signals received by the terminal 2 are extracted (111). Then, whether the paths thus extracted pass through a range affected by the change in environment is determined (112). In order to take the diffraction of radio waves at the edges of the structure into consideration, a range wider than a location of change in structure may be determined as the range affected by the change. Note that N is any integer set in accordance with a desired evaluation accuracy. For normal evaluation, the calculation may be made with N = 3. In this manner, a propagation path that is largely affected by an environmental change and thus largely affects the received intensity of a signal to the terminal is selected.

When there is a path passing through the affected range, the propagation evaluation on the path is recalculated using the three-dimensional model newly created to reflect the environmental change (113). When there are a plurality of affected paths, the recalculation is performed on all the plurality of paths.

Next, whether a line of sight environment has been produced between the terminal 2 and the base station 3 due to a change in the environment, that is, whether a straight line between the terminal 2 and the base station 3 passes through a region with a change in environment is determined (114). When the environmental change results in a line of sight from the base station 3 to the terminal 2 (Yes in 115), there is a path that is largely influential. Thus, propagation evaluation is calculated for a direct path passing through the line of sight environment (116).

Finally, the received signal power at the terminal is recalculated using the recalculation result and a prior calculation result (117).

This processing is executed on each of transmission from the base station 3 to the terminal 2 and transmission from the base station 3 to the terminal 2.

Fig. 5 is a diagram illustrating an example of a screen presented to the operation manager in the present embodiment.

In a communication area diagram on a screen 7A, a content of an environmental change (movement of the structure 4) is displayed, and terminals with ID = 2 and 4 that are affected by the change are displayed in a mode different from that for other terminals. In a terminal information display region, an estimated value of received power of each terminal after the environmental change is displayed, and a warning is displayed for the terminals with ID = 2 and 4 that might have communication statuses changed.

As described above, the evaluation device according to the first embodiment recognizes a change in the environment of a target area from image data obtained by a camera and the like, corrects the three-dimensional model in accordance with the change, calculates a range in which the environmental change affect radio communications, and performs reevaluation only on a radio wave propagation path in the affected range. With this configuration, a time required for radio wave propagation evaluation is shortened, whereby a failure can be addressed swiftly. Specifically, the three-dimensional model is corrected in accordance with a partial change in the environment of the target area, and the corrected three-dimensional model is used, so that the radio wave propagation environment can be swiftly evaluated without repeating the measurement. The radio wave propagation status is evaluated only on a path affected by the environmental change, whereby real time calculation of the impact of the environmental change can be achieved while reducing the calculation amount. The radio wave propagation evaluation is recalculated for a radio wave propagation path that involves a large intensity of a signal received by a terminal and passes through the region with the environmental change, whereby the amount of calculation for radio wave propagation evaluation can be reduced. The radio wave propagation evaluation is recalculated for a radio wave propagation path including a straight line, between the base station and the terminal, passing through the region with a large environmental change, whereby the amount of calculation for radio wave propagation evaluation can be reduced. Furthermore, a change in the radio wave reception status of a terminal affected by the environmental change is notified, so that a change in environment causing a change in communication status (that is, a reason of change) can be clearly presented.

### Second embodiment

As a second embodiment of the present invention, a system is described that presents an alternative position of the terminal when a result of evaluation indicates that an environmental change renders communications performed by the terminal difficult. In the second embodiment, a configuration and processing different from those in the first embodiment described above will be mainly described, and description on the configuration and the processing that are the same as those in the first embodiment will be omitted.

The configuration of the evaluation device 1 according to the present embodiment is the same as that in the first embodiment illustrated in Fig. 2.

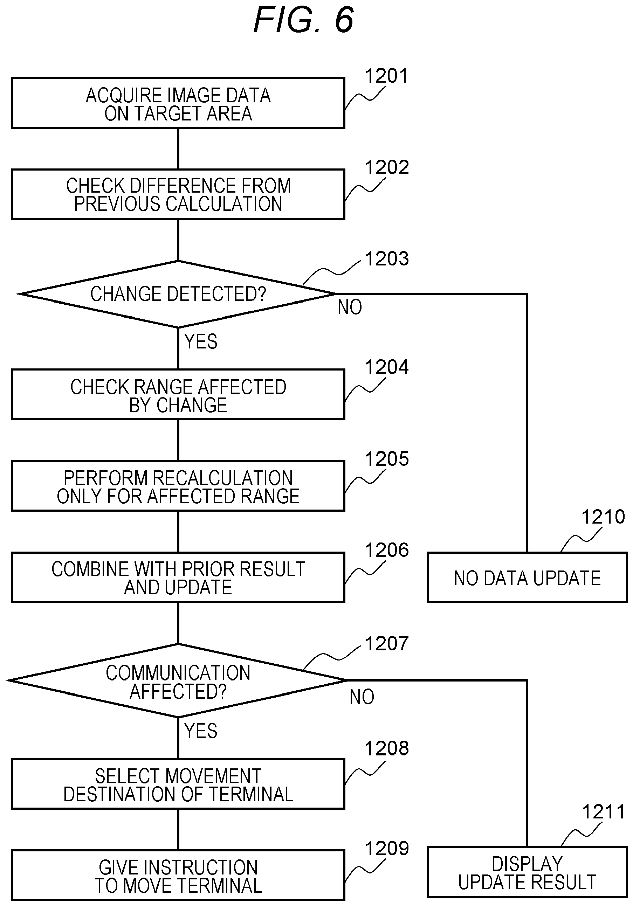

Fig. 6 is a flowchart illustrating a sequence of operations performed by an evaluation device according to the present embodiment.

The sequence of operations performed by the evaluation device 1 including acquiring an image from the camera 5 (1201), checking an environmental change (1202), and updating the signal reception status and the transmitted signal arrival status of each terminal (1206) is the same as that in the first embodiment. In other words, steps 1201 to 1206 and 1210 are the same as steps 101 to 106 and 108 in Fig. 3.

Whether the received signal power is compromised and the communications are affected as a result of updating the statuses of the transmitted and received signals in step 1206 is determined (1207). Whether the communications are affected can be determined based on whether the communications are interrupted, communication speed drops below a predetermined threshold, or the other like criterion. When the communications are determined to be not affected, the updated status of the transmitted and received signals is displayed (1211), and the system stands by until the next image is acquired or an instruction from the operation manager is received.

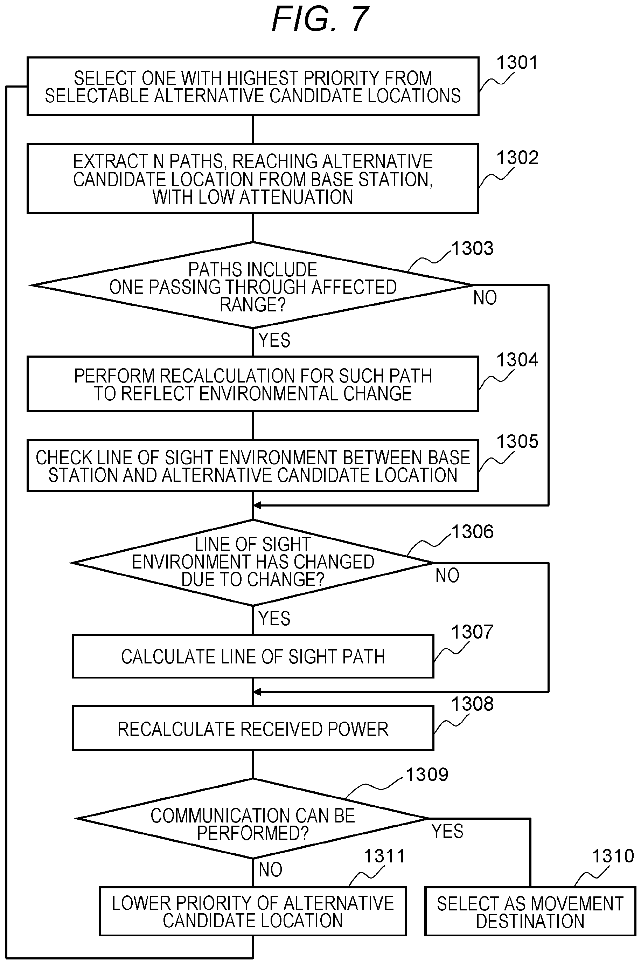

On the other hand, when the communications are determined to be affected, the evaluation device 1 selects an alternative position candidate to be the movement destination of the terminal 2, and presents the alternative position candidate to the operation manager (1208). A method of selecting the alternative position candidate will be described later with reference to Fig. 7. Then, the evaluation device 1 issues an instruction to move the terminal 2 (1209).

Fig. 7 is a flowchart illustrating the method of selecting an alternative position candidate according to the present embodiment, and illustrates details of step 1208 in Fig. 6.

In the evaluation device 1, a plurality of alternative candidate locations of each terminal 2 are recorded in the evaluation device 1 in advance, based on a movable range and the like of each terminal 2. Priorities may be set for the alternative candidate locations on the operation manager side, based on indices such as whether it is easy to move to the location. Upon determining that the communications performed by the terminal 2 are affected by the environmental change, the evaluation device 1 selects one of the alternative candidate locations with the highest priority (1301), and evaluates the communication status of the terminal 2 at the alternative candidate location selected. Then, an impact on the path and a change in the line of sight condition due to the environmental change are checked for evaluating the communication status after the environmental change as in the case of the evaluation on the terminal 2 (1302 to 1308). Thus, steps 1302 to 1308 are the same as steps 111 to 117 in Fig. 4.

Then, whether communications can be performed is determined using the recalculated received power (1309). When the result of the determination indicates that the communications can be performed after the environmental change, the alternative candidate location is selected as the movement destination (1310). On the other hand, when the communications cannot be performed at the alternative candidate location, the priority of the alternative candidate location is lowered (1311), and the processing returns to step 1301 to select the next alternative candidate location.

In the flowchart illustrated, the alternative candidate locations are selected one by one as the movement destination in the descending order of priority. Alternatively, when the processing returns to step 1301 after step 1310, a plurality of next alternative candidate locations may be selected as the movement destinations.

With the processing described above, an alternative candidate location at which the communications can be performed after the environmental change can be selected and presented to the operation manager.

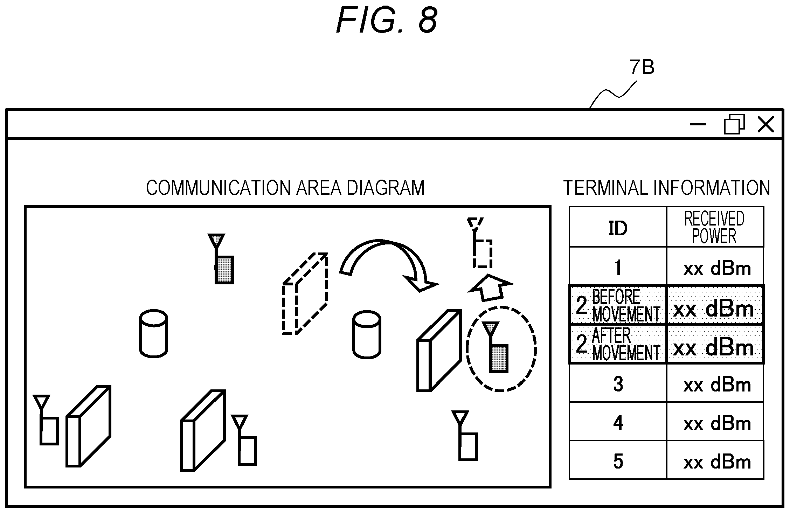

Fig. 8 is a diagram illustrating an example of a screen presented to the operation manager in the present embodiment.

In a communication area diagram on a screen 7B, a content of an environmental change (movement of the structure 4) is displayed, and terminals with ID = 2 and 4 that are affected by the change are displayed in a mode different from that for other terminals. For a terminal by which communications are affected by the environmental change, the alternative candidate location selected as the movement destination at which the communications can be performed after the environmental change is presented. In a terminal information display region, an estimated value of received power of each terminal is displayed, and estimated values of received power before and after the environmental change are displayed for a terminal with ID = 2 the communication status of which might change before and after the environmental change.

The second embodiment described above can propose a solution affected communications.

### Third embodiment

As a third embodiment of the present invention, a system is described that changes the connection destination of the terminal when a result of evaluation indicates that a change in environment renders communications performed by the terminal difficult. In the third embodiment, a configuration and processing different from those in the first and the second embodiments described above will be mainly described, and description on the configuration and the processing that are the same as those in the first and the second embodiments will be omitted.

The configuration of the evaluation device 1 according to the present embodiment is the same as that in the first embodiment illustrated in Fig. 2.

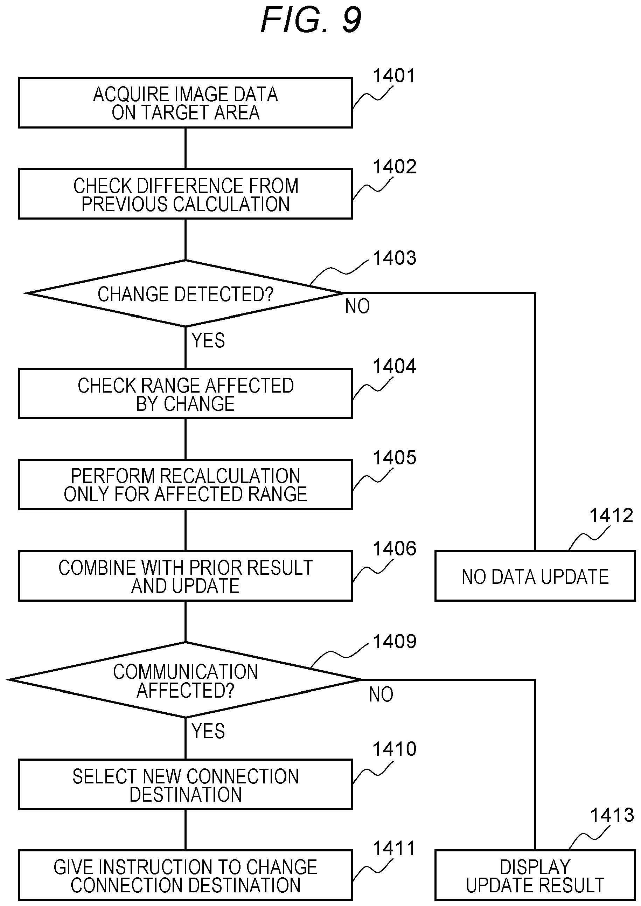

Fig. 9 is a flowchart illustrating a sequence of operations performed by an evaluation device according to the present embodiment.

The sequence operations performed by the evaluation device 1 including acquiring an image from the camera 5 (1401), checking a change in environment (1402), and updating the signal reception status and the transmitted signal arrival status of each terminal (1406) is the same as that in the first embodiment. In other words, steps 1401 to 1406 and 1412 are the same as steps 101 to 106 and 108 in Fig. 3.

Whether the received signal power is compromised and the communications are affected as a result of updating the statuses of the transmitted and received signals in step 1406 is determined (1409). Whether the communications are affected can be determined based on whether the communications are interrupted, communication speed drops below a predetermined threshold, or the other like criterion. When the communications are determined to be not affected, the updated status of the transmitted and received signals is displayed (1413), and the system stands by until the next image is acquired or an instruction from the operation manager is received.

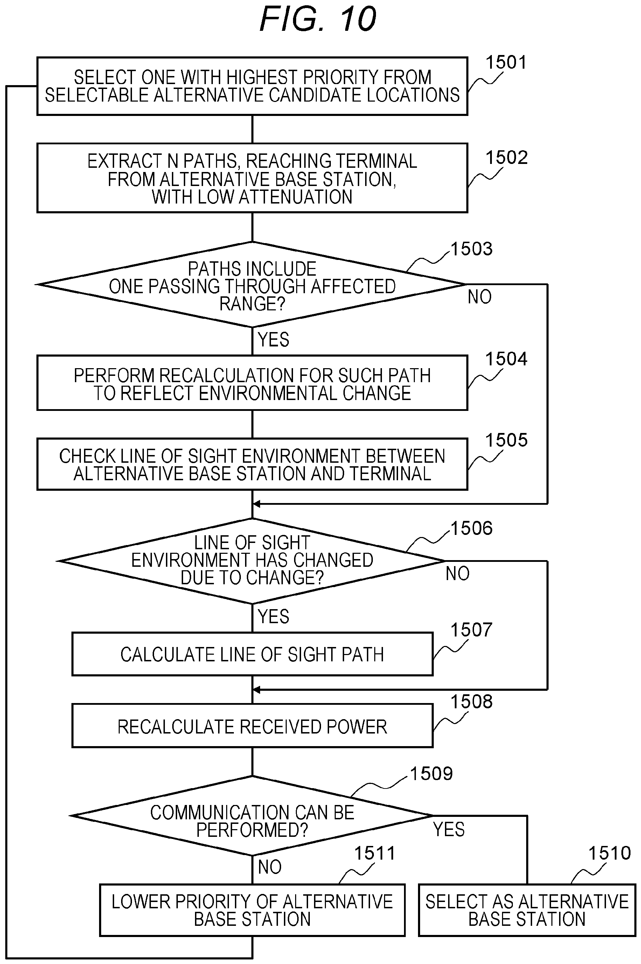

On the other hand, when the communications are determined to be affected, the evaluation device 1 selects the base station 3 that is a candidate to be connected to the terminal 2, to be the new connection destination, and presents the base station 3 as the new connection destination to the operation manager (1410). A method of selecting the base station 3 as the new connection destination will be described later with reference to Fig. 10. Then, the evaluation device 1 instructs the communication system to switch the base station 3 to be connected to the terminal 2 (1411). The instruction to the communication system may be automatically issued by the evaluation device 1, or may be manually issued by the operation manager notified of the switching of the base station 3 from the evaluation device 1.

Fig. 10 is a flowchart illustrating the method of selecting an alternative base station according to the present embodiment, and illustrates details of step 1410 in Fig. 9.

The base stations 3 connectable with the terminal 2 are recorded in advance to the evaluation device 1. Priorities may be set to the connectable base stations 3 in advance on the operation manager side, in accordance with the load of the base stations 3 and the like. Upon determining that the communications with the terminal 2 are affected by the environmental change, the evaluation device 1 selects the alternative base station with the highest priority (1501), and evaluates the communication status between the base station selected and the terminal 2. Then, an impact on the path and a change in the line of sight condition due to the environmental change are checked for evaluating the communication status after the environmental change as in the case of the evaluation on the terminal 2 (1502 to 1508). Thus, steps 1502 to 1508 are the same as steps 111 to 117 in Fig. 4.

Then, whether communications can be performed is determined using the recalculated received power (1509). When the result of the determination indicates that the communications can be performed with the alternative base station after the environmental change, the alternative base station is selected as the new connection destination (1510). On the other hand, when the communications cannot be performed with the alternative base station, the priority of the alternative base station is lowered (1511), and the processing returns to step 1501 to select the next alternative base station.

In the flowchart illustrated, the alternative base stations are selected one by one as the new connection destination. Alternatively, when the processing returns to step 1501 after step 1510, a plurality of alternative base stations may be selected as the new connection destinations.

Through the processing described above, the alternative base station with which the communications can be performed after the environmental change is selected, and the radio communication system can be instructed to switch to the alternative base station.

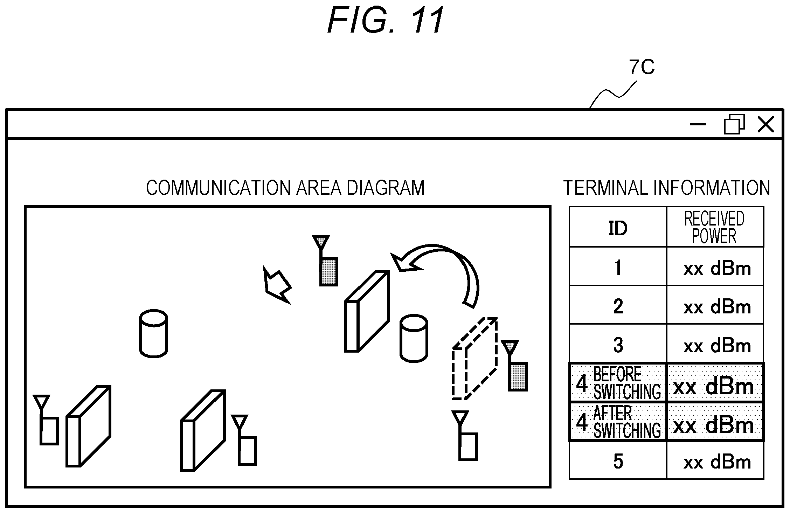

Fig. 11 is a diagram illustrating an example of a screen presented to the operation manager in the present embodiment.

In a communication area diagram on a screen 7C, a content of an environmental change (movement of the structure 4) is displayed, and terminals with ID = 2 and 4 that are affected by the change are displayed in a mode different from that for other terminals. For a terminal by which communications might be affected by the environmental change, the new connection destination (alternative base station) with which the communications can be performed after the environmental change is presented to the operation manager, for notifying the switching of the base station. In a terminal information display region, an estimated value of received power of each terminal is displayed, and estimated values of received power before and after the change in the connection destination are displayed for a terminal with ID = 4 the connection destination of which changes before and after the environmental change.

The third embodiment described above can propose a solution affected communications.

### Fourth embodiment

As a fourth embodiment of the present invention, an operation management system is described that, when a failure occurs in a radio communication system, reproduces the environment at the time point when the failure has occurred using a three-dimensional model, and elucidates the cause of the failure. In the fourth embodiment, a configuration and processing different from those in the first to the third embodiments described above will be mainly described, and description on the configuration and the processing that are the same as those in any of the first to the third embodiments will be omitted.

The configuration of the evaluation device 1 according to the present embodiment is the same as that in the first embodiment illustrated in Fig. 2. In addition to the operations according to the first embodiment, the evaluation device 1 provides the three-dimensional model, recorded in the model storage unit 14, with information on a timing at which the three-dimensional model is used and information the radio wave propagation evaluation result obtained with the three-dimensional model.

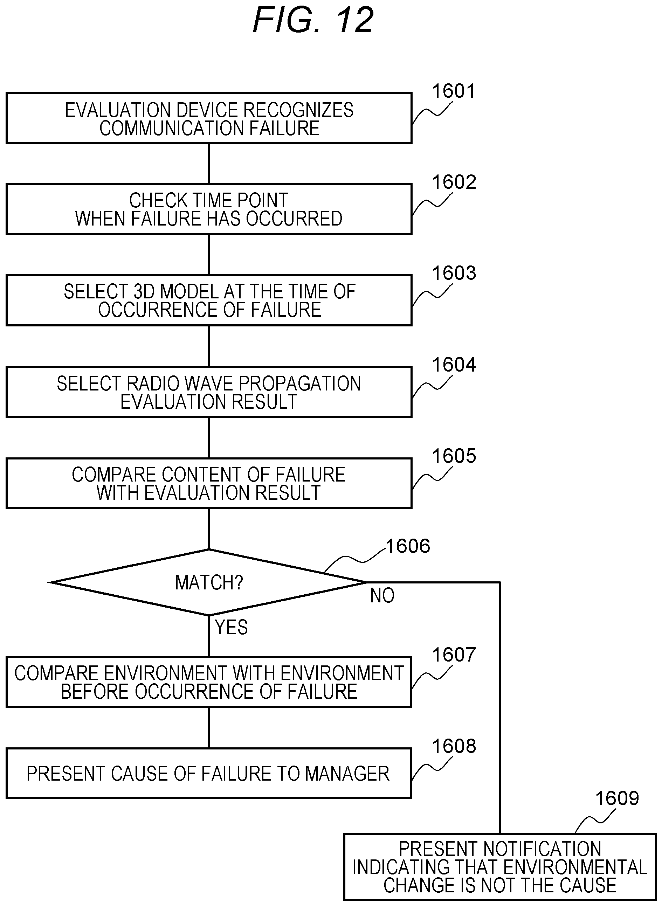

Fig. 12 is a flowchart illustrating a sequence of operations for communication failure cause estimation according to the present embodiment.

Upon recognizing the communication failure from a notification issued from the communication system or the operation manager (1601), the evaluation device 1 first checks the time point of the occurrence of the failure (1602), and reads the three-dimensional model at the time of the occurrence of the failure and the propagation evaluation result obtained with the three-dimensional model, from the model storage unit 14 (1603 and 1604). The evaluation result read from the model storage unit 14 is compared with the content of the failure that has occurred (1605). For example, when a communication failure occurs in a certain terminal, it is checked whether the radio wave propagation evaluation result at the time of the occurrence indicates that the received signal power of the terminal has lowered. Furthermore, it is confirmed that such an evaluation result is not obtained for a terminal without the failure (that is, the received signal power is not lowered). When the evaluation result matches the content of the failure (Yes in 1606), it is determined that the failure is successfully reproduced with the radio wave propagation evaluation. The environmental factor that has lead to the failure is checked by comparing information on the environment immediately before the occurrence of the failure with information on the environment at the time of occurrence of the failure (1607). A difference between the pieces of information on the environment compared with each other is presented to the operation manager as the cause of the failure (1608). On the other hand, when the evaluation result does not match the content of the failure, a change in the environment is unlikely to be the cause of the failure, and thus a notification indicating that the environmental change is not the cause is presented to the operation manager (1609).

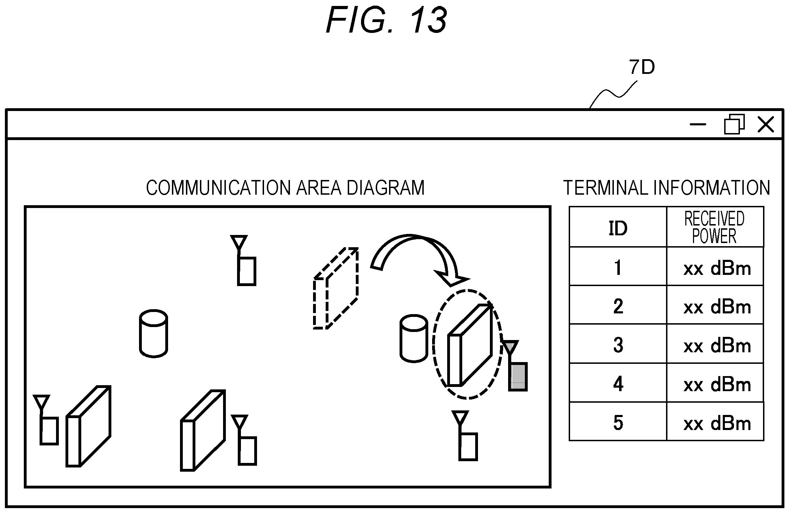

Fig. 13 is a diagram illustrating an example of a screen presented to the operation manager in the present embodiment.

In a communication area diagram on a screen 7D, a display mode of the terminal with the failure is different from those of other terminals, and an environmental change (movement of the structure 4), estimated to be the cause of the failure, is displayed. Further, in a terminal information display region, an estimated value of the received power of each terminal is displayed to be comparable with the content of the failure that has occurred.

With the fourth embodiment described above, the environment at the time of occurrence of failure is reproduced on the three-dimensional model to reproduce the communication failure, whereby information useful for analyzing the cause of the communication failure can be presented.

It should be noted that the present invention is not limited to the above-described embodiments, and includes various modifications. The scope of the invention is defined by the appended claims. Furthermore, for example, the above-described embodiment is described in detail in order to explain the present invention in an easily understandable manner, and the present invention is not necessarily limited to a system having all the described configurations. A configuration of one embodiment can be replaced with a configuration of another embodiment. A configuration of one embodiment can be added to a configuration to another embodiment. Other configurations may be added to/deleted from/replaced with a part of configurations of each embodiment.

A part pr all of the configurations, functions, processing parts, processing units, and the like described above may be implemented by hardware by being designed with an integrated circuit or the like, or may be implemented by software with a processor interpreting and executing programs implementing the respective functions.

Information such as programs, tables, and files for implementing each function may be stored in a storage device such as a memory, a hard disk, a Solid State Drive (SSD), or a storage medium such as an IC card, an SD card, a DVD, or the like.

Control lines and information lines indicate what is considered necessary for the description, and not all the control lines and the information lines required for implementation are necessarily illustrated. It can be regarded that almost all the configurations are actually connected to each other.

## Claims

1. A radio operation management system supporting operation management of a radio communication system including a base station (3) and a terminal (2), each having a fixed position in a radio communication area (6), the radio operation management system comprising a calculator (1) including:
one or more cameras (5) that detect a change in the status of a radio communication area (6) in which the radio communication management system is established,
a calculation device; and
a storage device capable of being accessed by the calculation device, the calculation device executing predetermined calculation processing to implement functional units including:
a model creation unit (13) that creates a three-dimensional model corresponding to an environment of the radio communication area (6);
a status change detection unit (11) that detects whether there has been a change in the environment of the radio communication area (6) and a position in the environment of the change, based on information from the one or more cameras (5);
a propagation calculation unit (15) that, if the change in the environment is detected by the status change detection unit (11), calculates, using the three-dimensional model, radio wave propagation evaluation only for a radio wave propagation path affected by the change in the environment; and
a display unit (16) that presents an influence of the change in the environment, based on the radio wave propagation evaluation calculated.

2. The radio operation management system according to claim 1, wherein the propagation calculation unit (15) selects a radio wave propagation path, of radio wave propagation paths from the base station (3) to the terminal (2), involving a large received signal intensity at the terminal (2) and passing through a region involving the change in the environment, and calculates the radio wave propagation evaluation for the radio wave propagation path selected.

3. The radio operation management system according to claim 1, wherein the propagation calculation unit (15) selects a radio wave propagation path including a straight line between the base station (3) and the terminal (2) passing through a region involving the change in the environment, and calculates the radio wave propagation evaluation for the radio wave propagation path selected.

4. The radio operation management system according to claim 1, wherein the display unit (16) presents a change in a radio wave reception status of a terminal (2) affected by the change in the environment.

5. The radio operation management system according to claim 1, wherein
the propagation calculation unit (15) calculates an alternative candidate for the fixed position of the terminal (2) affected by the change in the environment, and
the display unit (16) presents the alternative position candidate calculated.

6. The radio operation management system according to claim 1, wherein the propagation calculation unit (15) instructs a radio communication system to switch a base station (3) to be connected with a terminal (2) affected by the change in the environment.

7. The radio operation management system according to claim 1, wherein
the propagation calculation unit (15) compares a propagation evaluation result for a three-dimensional model at a time point when a failure has occurred in radio communications with a status of a failure that has actually occurred, to identify a change in the environment that has caused occurrence of the failure, and
the display unit (16) presents the change in the environment identified.

8. A radio operation supporting method performed by a radio operation management system supporting operation management of a radio communication system including a base station (3) and a terminal (2), each having a fixed position in a radio communication area (6), the radio operation management system including: one or more cameras (5) that detect a change in the status of a radio communication area (6) in which the radio communication management system is established, a calculation device that executes predetermined calculation processing; and a storage device capable of being accessed by the calculation device, the radio operation supporting method comprising:
creating a three-dimensional model corresponding to an environment of a radio communication area (6);
detecting whether there has been a change in the environment of the radio communication area (6) and a position in the environment of the change;
calculating, when a change in the environment is detected, and using the three-dimensional model, radio wave propagation evaluation only for a radio wave propagation path affected by a change in the environment, based on information from the one or more cameras (5); and
presenting an influence of the change in the environment, based on the radio wave propagation evaluation calculated.

9. The radio operation supporting method according to claim 8, wherein the calculating includes selecting a radio wave propagation path, of radio wave propagation paths from the base station (3) to the terminal (2), involving a large received signal intensity at the terminal (2) and passing through a region involving the change in the environment, and calculating the radio wave propagation evaluation for the radio wave propagation path selected.

10. The radio operation supporting method according to claim 8, wherein the calculating includes selecting a radio wave propagation path including a straight line between the base station (3) and the terminal (2) passing through a region involving the change in the environment, and calculating the radio wave propagation evaluation for the radio wave propagation path selected.

11. The radio operation supporting method according to claim 8, wherein the presenting includes presenting a status of a change in a radio wave reception status of a terminal (2) the radio wave reception status of which has been changed by the change in the environment.

12. The radio operation supporting method according to claim 8, wherein
the calculating includes calculating an alternative candidate for the fixed position of the radio terminal (2) by which communications are affected by the change in the environment, and
the presenting includes presenting the alternative position candidate calculated.

13. The radio operation supporting method according to claim 8, wherein the calculating includes instructing a radio communication system to switch a base station (3) to be connected with a radio terminal (2) by which communications are affected by the change in the environment.

14. The radio operation supporting method according to claim 8, wherein
the calculating includes comparing a propagation evaluation result for a three-dimensional model at a time point when a failure has occurred in radio communications with a status of a failure that has actually occurred, to identify a change in the environment that has caused occurrence of the failure, and
the presenting includes presenting the change in the environment identified.

## Patentansprüche

1. Funkbetriebsverwaltungssystem, das die Betriebsverwaltung eines Funkkommunikationssystems unterstützt, welches eine Basisstation (3) und ein Endgerät (2) umfasst, die jeweils eine festgelegte Position in einem Funkkommunikationsbereich (6) aufweisen, wobei das Funkbetriebsverwaltungssystem eine Recheneinheit (1) umfasst, die Folgendes umfasst:
eine oder mehrere Kameras (5), die eine Änderung des Status eines Funkkommunikationsbereichs (6), in dem das Funkkommunikationsverwaltungssystem eingerichtet ist, detektieren;
eine Rechenvorrichtung; und
eine Speichervorrichtung, die in der Lage ist, der Rechenvorrichtung Zugriff zu gewähren, wobei die Rechenvorrichtung vorbestimmte Berechnungsverarbeitung ausführt, um funktionelle Einheiten zu implementieren, die folgende umfassen:
eine Modellerzeugungseinheit (13), die ein dreidimensionales Modell erzeugt, welches einer Umgebung des Funkkommunikationsbereichs (6) entspricht;
eine Statusänderungsdetektionseinheit (11), die basierend auf Informationen von der einen oder den mehreren Kameras (5) detektiert, ob eine Änderung in der Umgebung des Funkkommunikationsbereichs (6) und einer Position in der Umgebung der Änderung aufgetreten ist;
eine Ausbreitungsberechnungseinheit (15), die, wenn die Änderung in der Umgebung durch die Statusänderungsdetektionseinheit (11) detektiert wird, unter Verwendung des dreidimensionalen Modells eine Funkwellenausbreitungsbewertung ausschließlich für einen von der Änderung in der Umgebung betroffenen Funkwellenausbreitungspfad berechnet; und
eine Anzeigeeinheit (16), die einen Einfluss der Änderung in der Umgebung basierend auf der berechneten Funkwellenausbreitungsbewertung präsentiert.

2. Funkbetriebsverwaltungssystem nach Anspruch 1, wobei die Ausbreitungsberechnungseinheit (15) aus Funkwellenausbreitungspfaden von der Basisstation (3) bis zum Endgerät (2) einen Funkwellenausbreitungspfad auswählt, der eine hohe empfangene Signalintensität am Endgerät (2) beinhaltet und durch eine Region verläuft, die die Änderung in der Umgebung beinhaltet, und die Funkwellenausbreitungsbewertung für den ausgewählten Funkwellenausbreitungspfad berechnet.

3. Funkbetriebsverwaltungssystem nach Anspruch 1, wobei die Ausbreitungsberechnungseinheit (15) einen Funkwellenausbreitungspfad auswählt, der eine gerade Linie zwischen der Basisstation (3) und dem Endgerät (2) umfasst, die durch eine die Änderung in der Umgebung beinhaltende Region verläuft, und die Funkwellenausbreitungsbewertung für den ausgewählten Funkwellenausbreitungspfad berechnet.

4. Funkbetriebsverwaltungssystem nach Anspruch 1, wobei die Anzeigeeinheit (16) eine Änderung eines Funkwellenempfangsstatus eines Endgeräts (2), das durch die Änderung in der Umgebung betroffen ist, präsentiert.

5. Funkbetriebsverwaltungssystem nach Anspruch 1, wobei
die Ausbreitungsberechnungseinheit (15) einen alternativen Kandidaten für die festgelegte Position des Endgeräts (2), das durch die Änderung in der Umgebung betroffen ist, berechnet und
die Anzeigeeinheit (16) den berechneten alternativen Kandidaten für die Position präsentiert.

6. Funkbetriebsverwaltungssystem nach Anspruch 1, wobei die Ausbreitungsberechnungseinheit (15) ein Funkkommunikationssystem anweist, eine Basisstation (3) umzuschalten, um mit einem Endgerät (2), das von der Änderung in der Umgebung betroffen ist, verbunden zu werden.

7. Funkbetriebsverwaltungssystem nach Anspruch 1, wobei
die Ausbreitungsberechnungseinheit (15) zu einem Zeitpunkt, in dem eine Störung in einer Funkkommunikation aufgetreten ist, ein Ausbreitungsbewertungsergebnis für ein dreidimensionales Modell mit dem Status einer Störung, die tatsächlich eingetreten ist, vergleicht, um eine Änderung in der Umgebung zu identifizieren, die das Auftreten der Störung verursacht hat, und
die Anzeigeeinheit (16) die identifizierte Änderung in der Umgebung präsentiert.

8. Funkbetriebsunterstützungsverfahren, das durch ein Funkbetriebsverwaltungssystem durchgeführt wird, das die Betriebsverwaltung eines Funkkommunikationssystems unterstützt, das eine Basisstation (3) und ein Endgerät (2) umfasst, die jeweils eine festgelegte Position in einem Funkkommunikationsbereich (6) aufweisen, wobei das Funkbetriebsverwaltungssystem Folgendes umfasst: eine oder mehrere Kameras (5), die eine Änderung des Status eines Funkkommunikationsbereichs (6), in dem das Funkkommunikationsverwaltungssystem eingerichtet ist, detektieren, eine Rechenvorrichtung, die vorbestimmte Berechnungsverarbeitung ausführt; und eine Speichervorrichtung, die in der Lage ist, der Rechenvorrichtung Zugriff zu gewähren, wobei das Funkbetriebsunterstützungsverfahren Folgendes umfasst:
Erzeugen eines dreidimensionalen Modells, das einer Umgebung eines Funkkommunikationsbereichs (6) entspricht;
Detektieren, ob eine Änderung in der Umgebung des Funkkommunikationsbereichs (6) und einer Position in der Umgebung der Änderung aufgetreten ist;
Berechnen einer Funkwellenausbreitungsbewertung ausschließlich für einen von der Änderung in der Umgebung betroffenen Funkwellenausbreitungspfad, wenn eine Änderung in der Umgebung detektiert wird, und unter Verwendung des dreidimensionalen Modells, basierend auf Informationen von der einen oder den mehreren Kameras (5); und
Präsentieren eines Einflusses der Änderung in der Umgebung basierend auf der berechneten Funkwellenausbreitungsbewertung.

9. Funkbetriebsunterstützungsverfahren nach Anspruch 8, wobei das Berechnen das Auswählen eines Funkwellenausbreitungspfads, der eine hohe empfangene Signalintensität am Endgerät (2) beinhaltet und durch eine Region verläuft, die die Änderung in der Umgebung beinhaltet, aus Funkwellenausbreitungspfaden von der Basisstation (3) bis zum Endgerät (2) und das Berechnen der Funkwellenausbreitungsbewertung für den ausgewählten Funkwellenausbreitungspfad umfasst.

10. Funkbetriebsunterstützungsverfahren nach Anspruch 8, wobei das Berechnen das Auswählen eines Funkwellenausbreitungspfads, der eine gerade Linie zwischen der Basisstation (3) und dem Endgerät (2) umfasst, die durch eine die Änderung in der Umgebung beinhaltende Region verläuft, und das Berechnen der Funkwellenausbreitungsbewertung für den ausgewählten Funkwellenausbreitungspfad umfasst.

11. Funkbetriebsunterstützungsverfahren nach Anspruch 8, wobei das Präsentieren das Präsentieren des Status einer Änderung eines Funkwellenempfangsstatus eines Endgeräts (2), dessen Funkwellenempfangsstatus durch die Änderung in der Umgebung geändert wurde, umfasst.

12. Funkbetriebsunterstützungsverfahren nach Anspruch 8, wobei
das Berechnen das Berechnen eines alternativen Kandidaten für die festgelegte Position des Funkendgeräts (2), durch das Kommunikation durch die Änderung in der Umgebung betroffen ist, umfasst und
das Präsentieren das Präsentieren des berechneten alternativen Kandidaten für die Position umfasst.

13. Funkbetriebsunterstützungsverfahren nach Anspruch 8, wobei das Berechnen umfasst, dass ein Funkkommunikationssystem angewiesen wird, eine Basisstation (3) umzuschalten, um mit einem Endgerät (2), durch das Kommunikation durch die Änderung in der Umgebung betroffen ist, verbunden zu werden.

14. Funkbetriebsunterstützungsverfahren nach Anspruch 8, wobei
das Berechnen das Vergleichen eines Ausbreitungsbewertungsergebnisses für ein dreidimensionales Modell mit dem Status einer Störung, die tatsächlich eingetreten ist, zu einem Zeitpunkt umfasst, in dem eine Störung in einer Funkkommunikation aufgetreten ist, um eine Änderung in der Umgebung zu identifizieren, die das Auftreten der Störung verursacht hat, und
das Präsentieren das Präsentieren der identifizierten Änderung in der Umgebung umfasst.

## Revendications

1. Système de gestion d'opérations radio prenant en charge la gestion d'opérations d'un système de communication radio incluant une station de base (3) et un terminal (2), chacun ayant une position fixe dans une zone de communication radio (6), le système de gestion d'opérations radio comprenant un calculateur (1) incluant :
une ou plusieurs caméras (5) qui détectent un changement dans l'état d'une zone de communication radio (6) dans laquelle est établi le système de gestion de communication radio,
un dispositif de calcul ; et
un dispositif de stockage auquel peut accéder le dispositif de calcul, le dispositif de calcul exécutant un traitement de calcul prédéterminé pour mettre en oeuvre des unités fonctionnelles incluant :
une unité de création de modèle (13) qui crée un modèle tridimensionnel correspondant à un environnement de la zone de communication radio (6) ;
une unité de détection de changement d'état (11) qui détecte s'il s'est produit un changement dans l'environnement de la zone de communication radio (6) et une position dans l'environnement du changement, sur la base d'informations provenant des une ou plusieurs caméras (5) ;
une unité de calcul de propagation (15) qui, si le changement dans l'environnement est détecté par l'unité de détection de changement d'état (11), calcule, à l'aide du modèle tridimensionnel, une évaluation de propagation d'ondes radio uniquement pour un trajet de propagation d'ondes radio affecté par un changement dans l'environnement ; et
une unité d'affichage (16) qui présente une influence du changement dans l'environnement, sur la base de l'évaluation de propagation d'ondes radio calculée.

2. Système de gestion d'opérations radio selon la revendication 1, dans lequel l'unité de calcul de propagation (15) sélectionne un trajet de propagation d'ondes radio, parmi des trajets de propagation d'ondes radio de la station de base (3) vers le terminal (2), impliquant une forte intensité de signal reçu au niveau du terminal (2) et passant par une région impliquant le changement dans l'environnement, et calcule l'évaluation de propagation d'ondes radio pour le trajet de propagation d'ondes radio sélectionné.

3. Système de gestion d'opérations radio selon la revendication 1, dans lequel l'unité de calcul de propagation (15) sélectionne un trajet de propagation d'ondes radio incluant une ligne droite entre la station de base (3) et le terminal (2) passant par une région impliquant le changement dans l'environnement, et calcule l'évaluation de propagation d'ondes radio pour le trajet de propagation d'ondes radio sélectionné.

4. Système de gestion d'opérations radio selon la revendication 1, dans lequel l'unité d'affichage (16) présente un changement dans un état de réception d'ondes radio d'un terminal (2) affecté par le changement dans l'environnement.

5. Système de gestion d'opérations radio selon la revendication 1, dans lequel
l'unité de calcul de propagation (15) calcule une position candidate alternative à la position fixe du terminal (2) affecté par le changement dans l'environnement, et
l'unité d'affichage (16) présente la position alternative candidate calculée.

6. Système de gestion d'opérations radio selon la revendication 1, dans lequel l'unité de calcul de propagation (15) ordonne à un système de communication radio de commuter une station de base (3) devant être connectée à un terminal (2) affecté par le changement dans l'environnement.

7. Système de gestion d'opérations radio selon la revendication 1, dans lequel
l'unité de calcul de propagation (15) compare un résultat d'évaluation de propagation pour un modèle tridimensionnel à un moment où une défaillance est apparue dans les communications radio avec un état d'une défaillance qui s'est réellement produite, pour identifier un changement dans l'environnement qui a provoqué l'apparition de la défaillance, et
l'unité d'affichage (16) présente le changement dans l'environnement identifié.

8. Procédé de prise en charge d'opérations radio mis en oeuvre par un système de gestion d'opérations radio prenant en charge la gestion d'opérations d'un système de communication radio incluant une station de base (3) et un terminal (2), chacun ayant une position fixe dans une zone de communication radio (6), le système de gestion d'opérations radio incluant : une ou plusieurs caméras (5) qui détectent un changement dans l'état d'une zone de communication radio (6) dans laquelle est établi le système de gestion de communication radio, un dispositif de calcul qui exécute un traitement de calcul prédéterminé ; et un dispositif de stockage auquel peut accéder le dispositif de calcul, le procédé de prise en charge d'opérations radio comprenant :
la création d'un modèle tridimensionnel correspondant à un environnement d'une zone de communication radio (6) ;
le fait de détecter s'il s'est produit un changement dans l'environnement de la zone de communication radio (6) et une position dans l'environnement du changement ;
le calcul, lorsqu'un changement dans l'environnement est détecté, et à l'aide du modèle tridimensionnel, d'une évaluation de propagation d'ondes radio uniquement pour un trajet de propagation d'ondes radio affecté par un changement dans l'environnement, sur la base d'informations provenant des une ou plusieurs caméras (5) ; et
la présentation d'une influence du changement dans l'environnement, sur la base de l'évaluation de propagation d'ondes radio calculée.

9. Procédé de prise en charge d'opérations radio selon la revendication 8, dans lequel le calcul inclut la sélection d'un trajet de propagation d'ondes radio, parmi des trajets de propagation d'ondes radio de la station de base (3) vers le terminal (2), impliquant une forte intensité de signal reçu au niveau du terminal (2) et passant par une région impliquant le changement dans l'environnement, et le calcul de l'évaluation de propagation d'ondes radio pour le trajet de propagation d'ondes radio sélectionné.

10. Procédé de prise en charge d'opérations radio selon la revendication 8, dans lequel le calcul inclut la sélection d'un trajet de propagation d'ondes radio incluant une ligne droite entre la station de base (3) et le terminal (2) passant par une région impliquant le changement dans l'environnement, et le calcul de l'évaluation de propagation d'ondes radio pour le trajet de propagation d'ondes radio sélectionné.

11. Procédé de prise en charge d'opérations radio selon la revendication 8, dans lequel la présentation inclut la présentation d'un état d'un changement dans un état de réception d'ondes radio d'un terminal (2) dont l'état de réception d'ondes radio a été modifié par le changement dans l'environnement.

12. Procédé de prise en charge d'opérations radio selon la revendication 8, dans lequel
le calcul inclut le calcul d'une position candidate alternative à la position fixe du terminal radio (2) par lequel les communications sont affectées par le changement dans l'environnement, et
la présentation inclut la présentation de la position candidate alternative calculée.

13. Procédé de prise en charge d'opérations radio selon la revendication 8, dans lequel le calcul inclut le fait d'ordonner à un système de communication radio de commuter une station de base (3) devant être connectée à un terminal radio (2) par lequel les communications sont affectées par le changement dans l'environnement.

14. Procédé de prise en charge d'opérations radio selon la revendication 8, dans lequel
le calcul inclut la comparaison d'un résultat d'évaluation de propagation pour un modèle tridimensionnel à un moment où une défaillance est apparue dans les communications radio avec un état d'une défaillance qui s'est réellement produite, pour identifier un changement dans l'environnement qui a provoqué l'apparition de la défaillance, et
la présentation inclut la présentation du changement dans l'environnement identifié.
